# EUROPÄISCHE PATENTSCHRIFT

(11) **EP 2 898 115 B1**
(45) Veröffentlichungstag und Bekanntmachung des Hinweises auf die Patenterteilung: **28.02.2018**
(21) Anmeldenummer: 13766500.6
(22) Anmeldetag: 19.09.2013
(51) Int. Cl.: C25B 1/08, C25B 9/06, C25B 9/20

(54) **ELEKTROLYSEBLOCK SOWIE ZELLRAHMEN, ELEKTRODENBAUGRUPPE UND BAUSATZ HIERFÜR**
ELECTROLYSIS BLOCK AND CELL FRAME, ELECTRODE ASSEMBLY AND CONSTRUCTION KIT THEREFOR
BLOC D'ÉLECTROLYSE AINSI QUE CADRE DE CELLULE, MODULE D'ÉLECTRODES ET KIT DE CONSTRUCTION

(30) Priorität: 20.09.2012 DE 102012216920
(43) Veröffentlichungstag der Anmeldung: 29.07.2015
(73) Patentinhaber: Zentrum für Sonnenenergie- und Wasserstoff-Forschung Baden-Württemberg, 70563 Stuttgart (DE)
(72) Erfinder: BRINNER, Andreas, 71277 Rutesheim (DE)
(74) Vertreter: Patentanwälte Ruff, Wilhelm, Beier, Dauster & Partner mbB
(86) Internationale Anmeldenummer: PCT/EP2013/069465
(87) Internationale Veröffentlichungsnummer: WO 2014/044749

(56) Entgegenhaltungen:
- DE-A1- 1 643 042
- DE-A1- 2 729 640
- DE-A1- 10 259 386
- US-A- 4 124 478
- US-A- 4 339 324
- US-A- 4 758 322
- US-A- 6 117 287
- US-A1- 2002 110 719
- US-A1- 2002 175 072
- US-A1- 2010 136 455
- US-A1- 2010 187 102
- US-B1- 6 555 267

## Beschreibung

Die Erfindung bezieht sich auf einen Elektrolyseblock, insbesondere einen solchen zur alkalischen Wasserelektrolyse, sowie auf einen Zellrahmen, eine Elektrodenbaugruppe und einen Bausatz für einen derartigen Elektrolyseblock.
Elektrolyseblöcke zur alkalischen Wasserelektrolyse bzw. Druckelektrolyse von Wasser sind verschiedentlich bekannt, insbesondere auch in fortgeschrittenen Stackdesign-Ausführungen. Bei diesem Realisierungstyp werden herkömmlich eine Vielzahl von Bauteilen, typisch mindestens 14 Bauteile pro Elektrolysezelle, stapelförmig aneinandergelegt und miteinander verbunden. Im Einzelnen sind dies unter anderem Zellmembranen, Bipolarplatten, Anoden- und Kathoden-Elektroden, Zellrahmen für die Anode und die Kathode, Stromübertragerstrukturen, Kanaldichtungen und umlaufende Dichtungen sowie Befestigungs-Druckringe. Ein Elektrolyseblock besteht hierbei typischerweise aus identischen aufeinandergeschichteten Zellanordnungen mit ca. 5 bis ca. 350 Zellen. Die einzelnen Bauteile werden zwecks einfacher Montage lösbar mechanisch miteinander verbunden, ineinander gesteckt oder als Filterpressanordnung geschichtet. Die Schichtung der Zellenstapel-Komponenten wird endseitig durch metallische druckfeste Endplatten vervollständigt, über die auch die elektrischen Anschlüsse und die Anschlüsse für die Elektrolysemedien, wie Elektrolyt und Produktgase, hergestellt werden. Die Endplatten und die Zellen werden typischerweise mit Zugankern und Federpaketen gleichmäßig mechanisch verspannt.
Diverse Elektrolyseblöcke bzw. elektrochemische Zellblockaufbauten und deren Zellrahmen sind in den Patentschriften US 4,124,478 und US 6,117,287 sowie den Offenlegungsschriften US 2010/0187102 A1, US 2002/0175072 A1, DE 27 29 640 A1, DE 102 59 386 A1 und US 2010/0136455 A1 offenbart.

Diese herkömmlichen Stackdesign-Elektrolyseblöcke weisen diverse Schwierigkeiten auf. Sie sind kaum großserientauglich, komplex hinsichtlich ihrer Abdichtung, weisen häufig wegen Paarung unterschiedlicher Abdichtmaterialien nur eine niedrige Temperatur-Zyklenfestigkeit auf und erfordern einen relativ hohen Materialverbrauch. Außerdem benötigen sie vergleichsweise viele separate Bauteile pro Elektrolysezelle.

Der Erfindung liegt als technisches Problem die Bereitstellung eines Elektrolyseblocks sowie eines Zellrahmens, einer Elektrodenbaugruppe und eines Bausatzes hierfür zugrunde, mit denen sich die Schwierigkeiten herkömmlicher Stackdesign-Elektrolyseblöcke ganz oder teilweise überwinden lassen.

Die Erfindung löst dieses Problem durch die Bereitstellung eines Zellrahmens mit den Merkmalen des Anspruchs 1, einer Elektrodenbaugruppe mit den Merkmalen des Anspruchs 6, eines Elektrolyseblock-Bausatzes mit den Merkmalen des Anspruchs 7 und eines Elektrolyseblocks mit den Merkmalen des Anspruchs 8.

Der erfindungsgemäße Zellrahmen ist aus einem Material mit Dichtungseigenschaften gebildet und weist wenigstens drei in Umfangsrichtung versetzt angeordnete Produktgasabfuhr-Durchgangsöffnungen mit zugehörigen Abfuhrkanälen auf, von denen ein Teil durch eine vorderseitige Abfuhrkanalstruktur und ein restlicher Teil durch eine rückseitige Abfuhrkanalstruktur des Zellrahmens gebildet sind. Diese Zellrahmenstruktur macht es möglich, wenigstens zwei fluidgetrennte Produktgasabfuhrstrukturen in einem Stapel von derartigen aufeinanderfolgenden Zellrahmen bereitzustellen, indem die Zellrahmen in einem solchen Stapel alternierend gegeneinander in Umfangsrichtung verdreht angeordnet werden. Der erfindungsgemäße Zellrahmen weist zudem wenigstens eine Elektrolytversorgungs-Durchgangsöffnung mit einem zugeordneten Versorgungskanal auf, der durch eine vorder- und/oder rückseitige Versorgungskanalstruktur des Zellrahmens gebildet ist. Damit ermöglicht der Zellrahmen gleichzeitig die notwendige Elektrolytversorgung für die Anoden- und/oder Kathodenseite einer jeweiligen Elektrolysezelle. Vorzugsweise sind drei in Umfangsrichtung versetzt angeordnete Elektrolytversorgungs-Durchgangsöffnungen mit zugeordneten Versorgungskanälen zur getrennten Elektrolytversorgung für die Anoden- und die Kathodenseite vorgesehen. Die Zellrahmenstruktur macht es dabei möglich, wenigstens zwei fluidgetrennte Elektrolyt-Versorgungskanalstrukturen in einem Stapel von derartigen aufeinanderfolgenden Zellrahmen bereitzustellen, indem die Zellrahmen in der gleichen Weise wie für die wenigstens zwei fluidgetrennten Produktgasabfuhrstrukturen verdreht angeordnet werden.

Weiter ist der Zellrahmen auf einer seiner beiden Seiten mit Dichtungswülsten und auf der anderen Seite mit korrespondierenden Dichtungseinkerbungen versehen. Dies bewirkt eine funktionssichere Abdichtung von je zwei aneinanderliegenden Zellrahmen eines Blockstapels nach außen und je nach Bedarf auch von internen Öffnungs- und Kanalstrukturen der Zellrahmen. Überhöhte Presskräfte und unerwünschte Verformungen der Dichtungswülste und Einkerbungen können vermieden werden, wozu bei Bedarf eine umlaufende Sitzfläche auf dem Zellrahmen vorgesehen sein kann.

Die Struktur des erfindungsgemäßen Zellrahmens macht es insbesondere möglich, zum Aufbau eines Elektrolyseblocks im Stackdesign eine Mehrzahl solcher Zellrahmen aneinander zu stapeln, die baugleich ausgeführt sind, ohne eine zweiten Typ von Zellrahmen mit andersartiger Struktur zu benötigen. Es genügt erfindungsgemäß eine Mehrzahl identisch gebauter Zellrahmen zum Halten der Membranen, wie Bipolarplatten, Anoden- und Kathodenstrukturen. Dies reduziert den Fertigungs- und Montageaufwand gegenüber der herkömmlichen Verwendung mehrerer unterschiedlicher Zellrahmentypen deutlich und schafft die Voraussetzung für eine Großserientauglichkeit für die Herstellung entsprechender Elektrolyseblöcke.

In einer Weiterbildung der Erfindung weist der Zellrahmen an seinem Innenrand eine umlaufende Schlitzaufnahme zum Aufnehmen einer Bipolarplatte oder einer Membran auf. Dies macht den Zellrahmen in einer konstruktiv und funktionell vorteilhaften Weise zum Halten einer Bipolarplatte oder einer Membran geeignet.

In einer Weiterbildung der Erfindung sind am Zellrahmen zwei Gruppen fluidgetrennter Produktgasabfuhrstrukturen unter Verwendung der entsprechenden Produktgasabfuhr-Durchgangsöffnungen und Abfuhrkanäle ausgebildet, um zwei Produktgase voneinander getrennt abführen zu können. Dabei sind die zu den beiden Gruppen gehörigen Produktgasabfuhr-Durchgangsöffnungen gegeneinander um einen vorgegebenen Winkel in Umfangsrichtung versetzt am Zellrahmen ausgebildet. Der Winkelversatz kann beispielsweise im Bereich zwischen 5° und 60° liegen, wie zwischen ca. 15° und 25°. Mit dieser Ausgestaltung können zwei Produktgase getrennt voneinander aus einem Stackdesign-Elektrolyseblock abgeführt werden, wenn dieser unter Verwendung solcher Zellrahmen aufgebaut ist, die dazu in der oben erwähnten Weise mit alternierendem Winkelversatz aneinander geschichtet sind. Entsprechend sind vorzugsweise auch zwei Gruppen fluidgetrennter Elektrolytzufuhrstrukturen unter Verwendung der zugehörigen Elektrolytversorgungs-Durchgangsöffnungen und Versorgungskanäle vorgesehen, um flüssigen Elektrolyt in die Produktgasseiten zuführen zu können. Der Winkelversatz der Elektrolytversorgungs-Durchgangsöffnungen ist identisch zu dem der Produktgasabfuhr-Durchgangsöffnungen und die beiden unterschiedlichen Typen von Durchgangsöffnungen sind um bis zu 180° Winkelversatz in Umfangsrichtung versetzt am Zellrahmen angeordnet. Dies realisiert dann eine Art Kreuzströmung von Elektrolyteintritt zu Gasabfuhr auf der Kathoden- bzw. der Anodenseite.

In einer Weiterbildung der Erfindung ist ein Druckring in einen radial äußeren Bereich des Zellrahmens integriert. Ein solcher Druckring kann zu einer hohen Stabilität des Zellrahmens beitragen.

In einer Weiterbildung der Erfindung sind ein oder mehrere Spannseilringe und/oder ein oder mehrere Cordlagen und/oder ein oder mehrere Metallringe mit unterschiedlichen Radien in den Zellrahmen integriert. Diese tragen zur inneren Druckfestigkeit des Zellrahmens nach außen sowie zu dessen Formstabilisierung und zum sicheren Halten der an ihm angebrachten Elektrolysezellkomponenten bei.

Eine erfindungsgemäße Elektrodenbaugruppe umfasst den erfindungsgemäßen Elektroden-Zellrahmen und ein einteilig vorgefertigtes Elektroden-Package. Letzteres beinhaltet eine Bipolarplatte, eine Kathoden-Stromübertragungsstruktur und eine Anoden-Stromübertragungsstruktur, die auf je einer Seite der Bipolarplatte angeordnet und an dieser fixiert sind, sowie eine Kathoden-Vorelektrode und eine Anoden-Vorelektrode, wobei die Vorelektroden auf der der Bipolarplatte abgewandten Seite der zugehörigen Stromübertragerstruktur angeordnet und an dieser fixiert sind. Das Elektroden-Package ist mit seiner Bipolarplatte am Elektroden-Zellrahmen gehalten, speziell in einer umlaufenden Schlitzaufnahme am Innenrand desselben. Das Fixieren der betreffenden Komponenten des Elektroden-Package aneinander kann zum Beispiel durch Punktschweißen erfolgen. Das Vorfertigen eines solchen Elektroden-Package reduziert den Montageaufwand, da auf diese Weise das Elektroden-Package als ein Bauteil mit dem Elektroden-Zellrahmen verbunden werden kann, an welchem dann das gesamte Elektroden-Package gehalten ist. Die Elektrodenbaugruppe kann dann als gesamte Einheit für den Aufbau eines Elektrolyseblockstapels verwendet werden, was die Anzahl loser Bauteile für den aufzubauenden Blockstapel und die ohmschen Übergangswiderstände der Elektrodenbaugruppe signifikant verringert.

Der erfindungsgemäße Bausatz für einen Elektrolyseblock umfasst eine vorgebbare Anzahl erfindungsgemäßer Elektrodenbaugruppen und eine vorgebbare Anzahl von Membranbaugruppen, die jeweils einen Membran-Zellrahmen und eine Membran beinhalten, die in einer umlaufenden Innenrand-Schlitzaufnahme des Membran-Zellrahmens gehalten ist. Dabei ist der Membran-Zellrahmen baugleich mit dem Elektroden-Zellrahmen, und die Elektrodenbaugruppe und die Membranbaugruppe sind dafür ausgelegt, den Elektrolyseblock durch alternierendes und um einen vorgegebenen Winkel verdrehtes Aneinanderlegen je einer Elektrodenbaugruppe und einer Membranbaugruppe aufzubauen. Bei Verwendung dieses Bausatzes genügt folglich eine bestimmte Anzahl an identischer Zellrahmen zum Aufbau eines Elektrolyseblocks aus mehreren gestapelten Elektrolysezellen, wobei ein Teil der Zellrahmen zum Halten der Membran und die anderen Zellrahmen zum Halten der Elektrodenbaugruppe benutzt werden. Insgesamt ist damit wiederum die Anzahl an lose zu stapelnden Bauteilen während des Herstellens eines entsprechenden Elektrolyseblockstapels minimiert. Die Membranen einerseits und die Elektrodenbaugruppe andererseits können in dem umlaufenden Schlitz am Innenrand des jeweiligen Zellrahmens sicher gehalten werden, die Abdichtung kann bei Bedarf durch entsprechende umlaufende Dichtungswulste und korrespondierende Dichtungseinkerbungen an den Seitenwänden der Schlitzaufnahme weiter erhöht werden.

Ein erfindungsgemäßer Elektrolyseblock besitzt einen Stapelaufbau aus aneinanderliegenden Zellrahmen, an denen Zellmembranen, Bipolarplatten sowie Anoden- und Kathoden-Elektrodenstrukturen gehalten sind. Charakteristischerweise sind hierfür baugleiche, identische, erfindungsgemäße Zellrahmen verwendet, wobei im Stapel benachbarte Zellrahmen alternierend um einen vorgegebenen Winkel in Umfangsrichtung versetzt angeordnet sind. Zu den Vorteilen der Verwendung nur eines Typs baugleicher Zellrahmen kann auf das oben Gesagte verwiesen werden. Das alternierend winkelversetzte Anordnen der Zellrahmen im Stapel ermöglicht in konstruktiv einfacher Weise die Schaffung der benötigten, fluidgetrennten Kanalstrukturen für die verschiedenen zu- und abgeführten flüssigen oder gasförmigen Elektrolysemedien in Verbindung mit einer geeigneten Strukturierung des Zellrahmens, so dass separate Kanaldichtungen in der Regel entfallen können. Beispielsweise können die Zellrahmen dazu dergestalt strukturiert und gegeneinander verdreht angeordnet sein, dass im Fall der Wasserelektrolyse der flüssige Elektrolyt über zugehörige Zufuhrkanäle, die vorzugsweise in einem unteren Bereich des Blockstapels verlaufen, zugeführt wird und zwei getrennte Abfuhrkanäle für Wasserstoff beziehungsweise Sauerstoff vorzugsweise in einem oberen Bereich des Blockstapels gebildet sind.
Zur erleichterten Kontrolle der wechselseitigen Verdrehung der Zellrahmen können von außen sichtbare Stellungsmarkierungen an den Zellrahmen vorgesehen sein. Zur exakten Ausrichtung der Zellrahmen zueinander können bei Bedarf korrespondierende Führungsnoppen und Noppenaufnahmen an gegenüberliegenden Zellrahmenseiten vorgesehen sein.
In einer Weiterbildung der Erfindung umfasst der Elektrolyseblock mindestens eine erfindungsgemäße Elektrodenbaugruppe oder er ist durch den erfindungsgemäßen Bausatz gebildet.
In Weiterbildung der Erfindung beinhaltet der erfindungsgemäße Elektrolyseblock blockendseitige Abschlusseinheiten, die auf der einen Blockendseite ein Kathoden-Polblech mit Endplatte und auf der anderen Blockendseite ein Anoden-Polblech mit Endplatte beinhalten. Dies komplettiert in einer konstruktiv vorteilhaften Weise den Elektrolyseblock mit geeigneten stirnendseitigen elektrischen Anschlüssen und/oder Elektrolytmedienanschlüssen.

Vorteilhafte Ausführungsformen der Erfindung sind in den Zeichnungen dargestellt und werden nachfolgend beschrieben. Hierbei zeigen:
- Fig. 1: eine Längsschnittansicht zweier in einem Elektrolyseblockstapel aufeinanderfolgender Zellrahmen mit einzusetzender Membran beziehungsweise einzusetzendem Elektroden-Package,
- Fig. 2: eine Draufsicht auf eine Rückseite eines Zellrahmens von Fig. 1,
- Fig. 3: eine Draufsicht auf eine Vorderseite des Zellrahmens von Fig. 2,
- Fig. 4: eine Längsschnittansicht entsprechend Fig. 1 mit vier aufeinanderfolgenden Zellrahmen und jeweils in die Zellrahmen eingefügten Membranen und Elektroden-Packages,
- Fig. 5: eine Längsschnittansicht entsprechend Fig. 4 eines kathodenendseitigen Elektrodenblockteils,
- Fig. 6: eine Längsschnittansicht entsprechend Fig. 5 für einen anodenendseitigen Elektrolyseblockteil,
- Fig. 7: eine Draufsicht auf eine Rückseite eines im kathodenendseitigen Blockteil von Fig. 5 verwendeten Kathoden-Polblechs,
- Fig. 8: eine Draufsicht auf eine Vorderseite des Kathoden-Polblechs von Fig. 7,
- Fig. 9: eine Draufsicht auf eine Rückseite eines im anodenendseitigen Blockteil von Fig. 6 verwendeten Anoden-Polblechs,
- Fig. 10: eine Draufsicht auf eine Vorderseite des Anoden-Polblechs von Fig. 9,
- Fig. 11: eine Draufsicht auf eine Rückseite einer in den endseitigen Blockteilen der Fig. 5 und 6 verwendeten Isolator-Druckplatte,
- Fig. 12: eine Draufsicht auf eine Vorderseite der Isolator-Druckplatte von Fig. 11 und
- Fig. 13: eine Draufsicht auf eine Rückseite einer in den endseitigen Blockteilen der Fig. 5 und 6 verwendeten Blockendplatte.

Nachstehend wird zur weiteren Erläuterung der Erfindung exemplarisch auf einen möglichen Aufbau eines Elektrolyseblocks zur alkalischen Wasserelektrolyse Bezug genommen, der sich mit einer minimalen Anzahl von Bauteilen realisieren lässt, wobei maximal viele Gleichteile verwendet werden, so dass aufgrund der dadurch erzielbaren hohen Stückzahlen für die einzelnen Bauteile relativ niedrige Produktionskosten erreicht werden können. Bei dem exemplarisch betrachteten Beispiel sind im Zellrahmenbereich keine Plattenmaterialien erforderlich, wodurch Materialbeschaffungskosten und Abfallkosten im Rahmen der Beschaffung und des Recyclings vermieden werden können.

Der betrachtete Elektrolyseblock verwendet runde Zellrahmen und eignet sich als Druckelektrolyseblock, der einem inneren Überdruck gut standhalten kann. Der Normaldruckbereich für den Elektrolysebetrieb liegt bei ca. 10 bar bis 30 bar, wobei ein Betriebs-Druckbereich bis maximal 60 bar vorgesehen sein kann. Beim Recycling des Elektrolyseblocks können die Einzelkomponenten in eindeutig trennbare Materialsortierungen aufbereitet werden, wozu sie materialmäßig entsprechend gefertigt sind. Weiter ist von Vorteil, dass dieser Elektrolyseblock keine separaten Dichtungsbauteile benötigt, da die verwendeten Zellrahmen bereits die benötigten Dichtungseigenschaften haben.

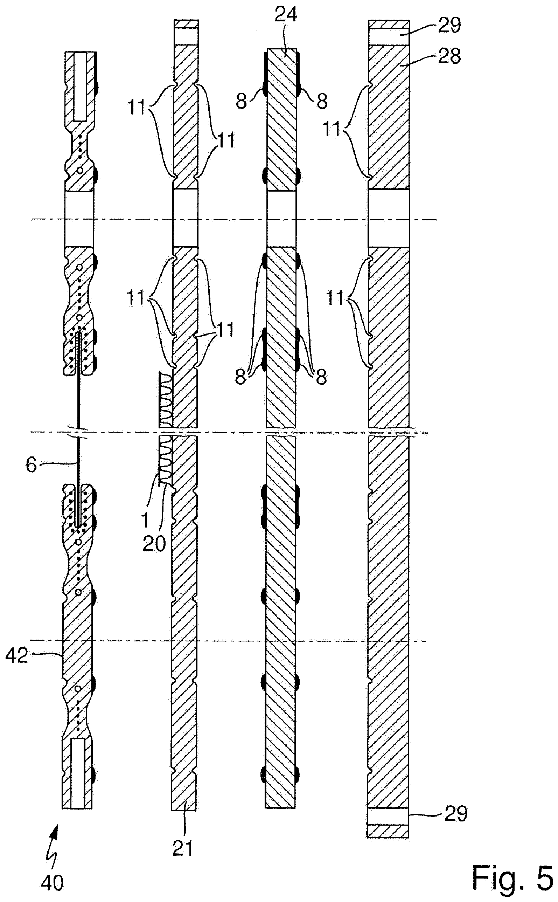

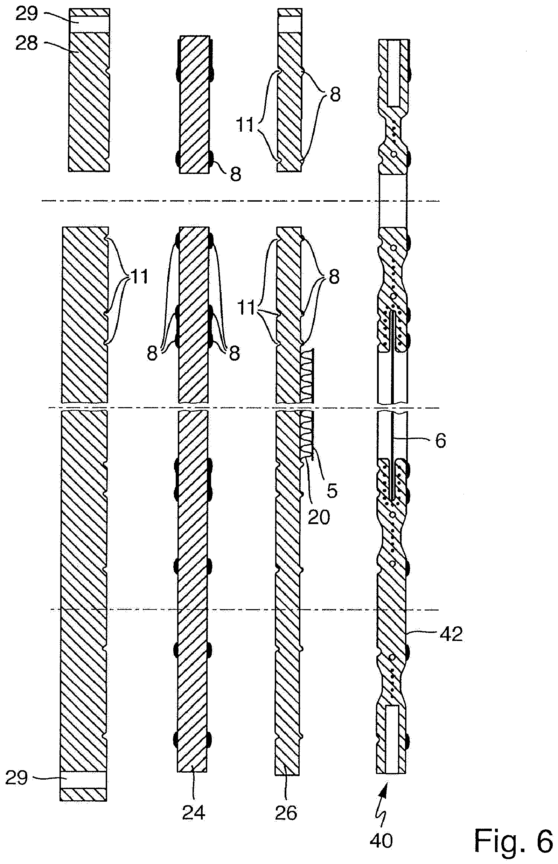

Der Elektrolyseblock besteht minimal aus folgenden Bauteilen, auf die im Folgenden näher eingegangen wird und die in den Figuren im Einzelnen dargestellt sind. Der Elektrolyseblock besitzt ein Stackdesign, d.h. einen Stapelaufbau, wobei der Stapel an den beiden Endseiten mit je einer metallischen Endplatte 28 abschließt, wie sie in den Figuren 5, 6 und 13 dargestellt ist. Die Endplatte 28 dient zur druckdichten Abdichtung und Einspannung der Elektrolysezellen und ist mit geeigneten Flanschen, Einschraubbohrungen 29 beziehungsweise Einschraubstutzen zur Zuführung beziehungsweise Abführung der flüssigen und gasförmigen Elektrolysemedien versehen. An die jeweilige Endplatte 28 schließt eine Isolator-Druckplatte 24 mit Dichtungs- und Isolationseigenschaften und Durchgangsbohrungen an, wie in den Figuren 5, 6, 11 und 12 dargestellt. An die Isolatorplatte 24 schließen kathodenseitig ein Kathoden-Polblech 21, siehe die Figuren 5, 7 und 8, und anodenseitig ein Anoden-Polblech 26, siehe die Figuren 6, 9 und 10, an. Zwischen dem Kathoden-Polblech 21 und dem Anoden-Polblech 26 befindet sich ein Stapel von Elektrolysezellen aufgebaut aus alternierend gestapelten Membranbaugruppen und Elektrodenbaugruppen.

Dabei ist eine der beiden Isolator-Druckplatten zusätzlich mit Durchgangsbohrungen für die Elektrolytmedien versehen, wie einem Wasserstoffauslass, einem Sauerstoffauslass, einem Anoden-Elektrolyteingang und einem Kathoden-Elektrolyteingang. Die andere Isolatorplatte ist ohne solche Durchgangsbohrungen realisiert. Alternativ kann hierfür auch eine Isolatorplatte mit den Durchgangsbohrungen und einer zusätzlichen Isolatormatte ohne Durchgangsbohrungen verwendet werden, welche die Durchgangsbohrungen an dieser Isolator-Druckplatte abdeckt.

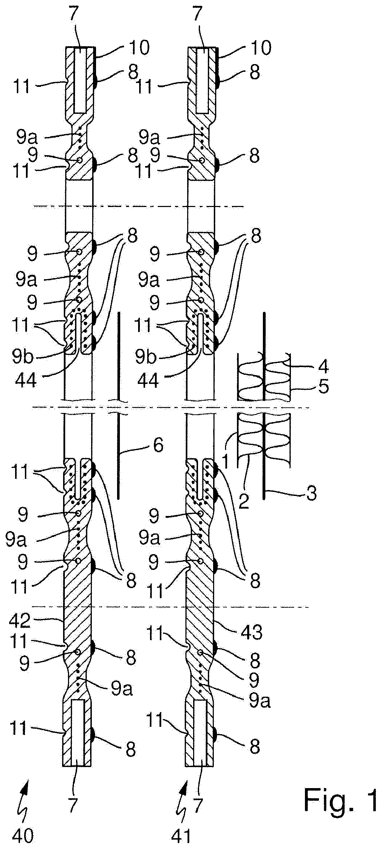

Jede Elektrolysezelle lässt sich hierbei in der Endmontage aus nur zwei Bauteilen zusammenbauen, der Membranbaugruppe 40 und der Elektrodenbaugruppe 41, wie sie in Fig. 1 in einer Explosions-Längsschnittansicht dargestellt sind. Die Membranbaugruppe 40 beinhaltet einen Zellrahmen 42 und eine an diesem gehaltene Membran 6. Die Elektrodenbaugruppe 41 beinhaltet einen zum Membran-Zellrahmen 42 baugleichen, identischen Zellrahmen 43 und ein daran gehaltenes Elektroden-Package bestehend aus einer Kathoden-Vorelektrode 1, einer Kathoden-Stromübertragerstruktur 2, einem Bipolarblech 3, einer Anoden-Stromübertragerstruktur 4 und einer Anoden-Vorelektrode 5. Dabei sind, wie aus Fig. 1 zu erkennen, die Kathoden-Stromübertragerstruktur 2 und die Anoden-Stromübertragerstruktur 4 als gas-/fluiddurchlässige Komponenten ausgebildet und auf je einer der beiden Seiten der Bipolarplatte 3 an dieser fixiert. Insbesondere können die beiden Stromübertragerstrukturen 2, 4 als Metallgestricke oder vorgeformte Streckmetalle ausgebildet sein, um dem gesamten Elektroden-Package elastisch rückfedernde Eigenschaften zu verleihen, mit denen die Vorelektroden 1, 5 elastisch rückfedernd an die jeweilige Membran 6 angedrückt und nicht starr aufgepresst werden. Für die Stromübertragerstrukturen 2, 4 eignet sich sowohl für die Anoden- als auch für die Kathodenseite insbesondere ein dünnes Streckmetall aus Nickel oder ein Nickel-Metallgestrick. Die beiden Vorelektroden 1, 5 sind auf der jeweils der Bipolarplatte 3 abgewandten Seite der zugehörigen Stromübertragerstruktur 2, 4 angebracht. Die erwähnten Verbindungen der Komponenten 1 bis 5 des Elektroden-Package können zum Beispiel durch Punktverschweißen bewirkt werden. Nach der Vorfertigung des Elektroden-Package können die freien Außenseiten der Vorelektroden 1, 5 bei Bedarf mit einer an sich üblichen Beschichtung versehen werden. Das Bipolarblech 3 ist, wie ebenfalls in Fig. 1 ersichtlich, im Durchmesser größer als die beiden Vorelektroden 1, 5 und die beiden Stromübertragerstrukturen 2, 4. Zur Bildung des Elektroden-Package werden die Teile 1 bis 5 so zusammengesetzt, dass das Bipolarblech 3 umlaufend einen gleichmäßigen radialen Überstand behält.

Jeder der beiden baugleichen Zellrahmen 42, 43 ist aus einem Material hergestellt, das selbst Dichtungseigenschaften hat, wobei auf einer der beiden Rahmenseiten Dichtungswülste 8 und auf der anderen Seite korrespondierende Einkerbungen 11 ausgebildet sind. Speziell ist jeder Zellrahmen 42, 43 aus einem gegenüber den Arbeitsmedien, wie Laugen, Wasserstoff und Sauerstoff, beständigen sowie temperaturbeständigen dauerelastischen Natur- oder Synthetikkautschukmaterial hergestellt, beispielsweise aus EPDM (Ethylen-Propylen-Dien-Monomer). In einen radial äußeren Bereich des Zellrahmens 42, 43 ist ein äußerer Metallring 7 eingelegt und in einem radial weiter innen liegenden Bereich sind Spannseilringe 9 und Cordlagen 9a aus Textil- oder Kunststofffasern in das Kautschukmaterial integriert, was die Druckbeständigkeit der einzelnen Zellrahmen 42, 43 sicherstellt beziehungsweise erhöht. Der äußere Metallring 7 gewährleistet auch die ausreichende Formstabilität und Steifheit des Zellrahmens 42, 43. Statt der oder zusätzlich zu den Spannseilringen 9 und Cordlagen 9a kann ein dünner Metallring in das Kautschukmaterial integriert sein, vorzugsweise mehrere koaxial angeordnete Metallringe mit unterschiedlichen Radien. Die Metallringe können untereinander durch dünne, radial verlaufende bzw. speichenförmig angeordnete Metallstege verbunden sein.

Dabei wird der metallische Druck-/Formring 7 bei der Herstellung des Zellrahmens 42, 43 zum Beispiel während der Vulkanisierung des EPDM-Materials in das Kautschukmaterial integriert beziehungsweise einvulkanisiert, ebenso die Spannseilringe 9 und Cordlagen 9a. Vor der Endbehandlung der Zellrahmen 42, 43, zum Beispiel durch Vulkanisierung von EPDM, werden die Membran 6, die als einlagige oder mehrlagige Membran realisiert sein kann, beziehungsweise das Elektroden-Package 1 bis 5 in den zugehörigen Zellrahmen 42, 43 eingesetzt, wozu die Zellrahmen 42, 43 an ihrem Innenrand mit einer entsprechenden Ringschlitzaufnahme 44 versehen sind. Die Vulkanisierung des Zellrahmens 42, 43 erfolgt zweckmäßigerweise in einer Ringform, so dass die im Rahmeninneren aufgenommenen Zellbestandteile, d.h. die Membran 6 und das Elektroden-Package 1 bis 5, vom Vulkanisierungsvorgang unbelastet bleiben.

Zur Begrenzung einer äußeren Vorspannkraft auf die Dichtungswülste 8 und die Einkerbungen 11 an der Oberfläche der Zellrahmen 42, 43 sind die Zellrahmen 42, 43 auf einer Seite in einem radial äußeren Bereich mit einer geeigneten Sitzfläche beziehungsweise Setzring 10 versehen. Wenn bei der Endmontage des Elektrolyseblockstapels während der Verspannung der verwendeten Anzahl von Zellrahmen keine äußeren Spalte zwischen den Zellrahmen mehr zu sehen sind, weil jeder Zellrahmen mit seiner Sitzfläche 10 dicht auf dem benachbarten Zellrahmen aufliegt, ist ein Zustand dichter Vorspannung erreicht. Im gezeigten Beispiel nehmen drei umlaufende Draht-Spannringe 9 den Innendruck innerhalb der gestapelten Elektrolysezellen auf und sorgen für eine Aussteifung des inneren Zellrahmenteils. Die Cordfasereinlagen 9a tragen dazu bei, dass die Druckfestigkeit des Zellrahmens 42, 43 und seine Formstabilität über die Ringbreite hinweg gewährleistet werden. Im gezeigten Beispiel umgibt ein Cordband 9b die Innenrand-Schlitzaufnahme 44 des Zellrahmen 42, 43 und sorgt auf diese Weise für eine ausreichende Festigkeit und Stabilität der beiden die Schlitzaufnahme einfassenden Kautschuklippen. Alternativ zu dem Cordband 9b können auch je eine Cordlage in jede der beiden Kautschuklippen integriert sein.

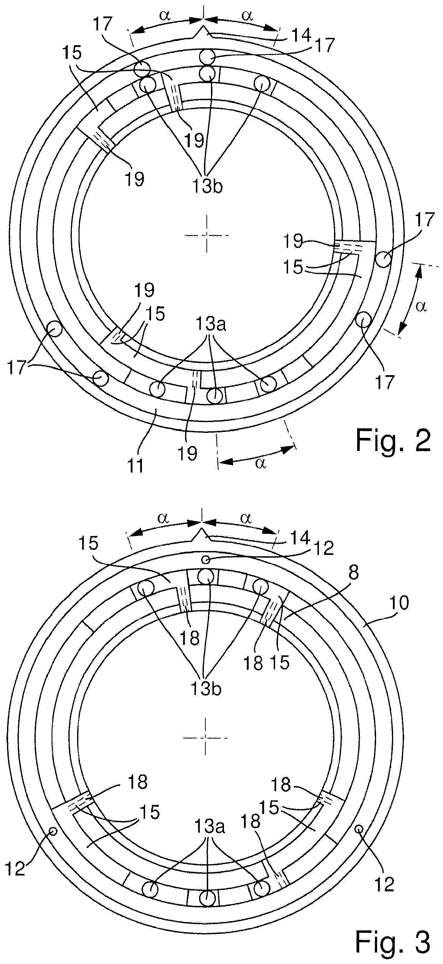

Wie aus den Draufsichten der Figuren 2 und 3 deutlich wird, weist jeder Zellrahmen 42, 43 in einem unterem Teil drei Durchgangsöffnungen beziehungsweise Bohrungen 13a für die Zufuhr von Elektrolyt, wie Kalilauge/Wasser-Gemisch, getrennt für die Kathodenseite, auf der bei alkalischer Elektrolyse Wasserstoff produziert wird, und Anodenseite, auf der dann Sauerstoff produziert wird, auf. Weiter besitzt jeder Zellrahmen 42, 43 in einem oberen Bereich drei Durchgangsöffnungen beziehungsweise Bohrungen 13b für die getrennte Abfuhr von Produktgasen, wie zur Wasserstoffabfuhr auf der Kathodenseite und zur Sauerstoffabfuhr auf der Anodenseite. In Ausführungsformen, in denen die oben erwähnten Metallringe mit den sie verbindenden Stegen statt der oder zusätzlich zu den Spannseilringen 9 und Cordlagen 9a vorhanden sind, sind die Stege so angeordnet, dass sie die Bohrungen 13a, 13b frei lassen.

Wie speziell aus Fig. 3 ersichtlich, ist die Zellrahmen-Vorderseite mit einer geeigneten Struktur aus teilweise umlaufenden Dichtungswülsten 8 und Flachkanälen 15 mit stützenden Dichtnoppen 18 innerhalb der Flachkanäle 15 versehen. Die Dichtungswülste 8 dichten Gas- und Flüssigkeitsaustritte nach außen ab. Außerdem dichten sie umlaufend die Durchgangsöffnungen 13a, 13b und die mit ihnen verbundenen Flachkanäle 15 ins Rahmeninnere ab. Die beiden äußersten Dichtungswülste 8 sind umlaufend und geschlossen und dichten den Zellrahmen 42, 43 nach außen gas- und flüssigkeitsdicht ab. Entsprechend ist, wie aus Fig. 2 zu erkennen, an der Zellrahmen-Rückseite eine Struktur aus teilweise umlaufenden Dichtungskerben 11, Flachkanälen 15 und zugeordneten Stützkerben 19 ausgebildet. Die Dichtungsstruktur auf der Rückseite ist gegenüber der Vorderseite im Uhrzeigersinn um einen Durchgangsöffnungs-Mittenwinkelabstand α verdreht ausgeführt, wobei der Versatzwinkel α je nach Anwendungsfall geeignet gewählt wird, zum Beispiel zwischen ca. 5° und 60°. Im gezeigten Beispiel beträgt er 20°.

Wie in den Fig. 2 und 3 gut zu erkennen, sind die zu den Durchgangsbohrungen 13a zugehörigen Flachkanäle 15 vorder- und rückseitig des Zellrahmens wesentlich länger als die zu den Durchgangsbohrungen 13b zugehörigen Flachkanäle 15. Dieser konstruktive Aufwand des Zellrahmens hat seinen Sinn darin, für die Elektrolytzufuhr durch die Durchgangsbohrungen 13a konstruktiv einen relativ hohen ionischen und elektrischen Widerstand durch eine lange dünne Kanalstruktur zu realisieren und für die Gasabfuhr durch die Durchgangsbohrungen 13b einen relativ geringen Druckabfall für die Produktgase Wasserstoff und Sauerstoff durch eine kurze Kanalstruktur zu bieten. Der zugeführte Elektrolyt ist ionisch und elektrisch leitfähig. Da die unteren Kanalbohrungen 13a im Betrieb durchgehend mit Elektrolyt gefüllt sind und damit fluidtechnisch und elektrisch alle Zellen untereinander verbinden, kann ein lonen- und Elektronenaustausch zwischen den Zellen, der den Gasproduktionswirkungsgrad des Elektrolyseurs (Faraday-Wirkungsgrad) verringert, nur durch hohen Widerstand minimiert werden. Je mehr Zellen in einem Block verbaut sind, umso wichtiger ist es, die Vermeidung von Faraday-Verlusten zu optimieren. Die Kanalstrukturen der Gasabfuhr für Wasserstoff und Sauerstoff können wesentlich kürzer ausgeführt werden, da das austretende schaumige Gas-Elektrolyt-Gemisch eine wesentlich geringere Leitfähigkeit hat.

Wenn die Dichtungswülste 8 des einen Zellrahmens gas- und flüssigkeitsdicht in die entsprechenden Einkerbungen 11 des anderen Zellrahmens mittels gemeinsamer äußerer Verspannung eingepresst sind, wird eine weitere Belastung der Dichtungswülste 8 dadurch stark abgemildert, dass dann die Setzfläche beziehungsweise der Setzring 10 außerhalb des äußersten Dichtungswulstrings 8 des einen Zellrahmens flächig auf das Rahmenmaterial des nächsten Zellrahmens spaltfrei gepresst wird. Eine weitere Druckkrafterhöhung ist dann zur besseren Abdichtung nicht mehr erforderlich.

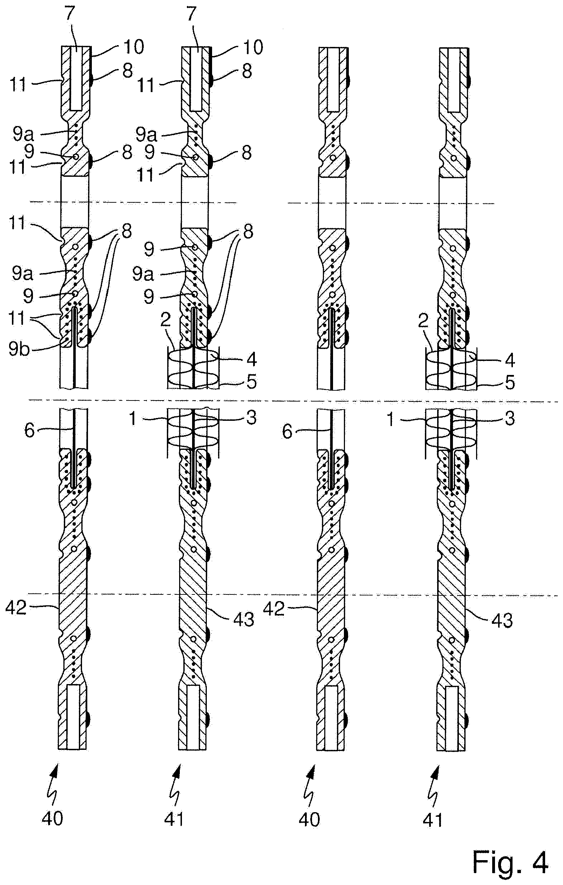

Jeder Zellrahmen 42, 43 hält mit seiner tiefen umlaufenden Innenrand-Schlitzaufnahme 44 die Membran 6 unter Bildung der entsprechenden Membranbaugruppe 40 beziehungsweise über das Bipolarblech 3 das Elektroden-Package 1 bis 5 unter Bildung der entsprechenden Elektrodenbaugruppe 41, wie dies in Fig. 4 für je zwei alternierend aufeinanderfolgende Membranbaugruppen 40 und Elektrodenbaugruppen 41 gezeigt ist. Das sichere Halten der Membran 6 beziehungsweise des Elektroden-Package 1 bis 5 ist durch Einschließung zwischen den schlitzbildenden Kautschuklippen gegeben, wobei die Abdichtung innerhalb des Schlitzes 44 zusätzlich durch das Aufpressen der Lippen mittels der beiden inneren umlaufenden Dichtungswülste 8 beziehungsweise Einkerbungen 11 auf die Membran 6 beziehungsweise das Bipolarblech 3 gewährleistet wird.

Wieder auf die Fig. 2 und 3 Bezug nehmend ist die Presskraft im Bereich der Verbindung der Flachkanäle 15 mit dem Zellrahmeninneren aufgrund der Unterbrechung der Dichtungswülste 8 entsprechend unterbrochen, weshalb auf der Zellrahmen-Vorderseite in den Flachkanälen 15 je nach Kanalbreite zwei oder mehr nebeneinander liegende, erhabene Dichtnoppen 18 pro Kanal 15 ausgebildet sind, welche die Dichtkraft im Bereich der die Flachkanäle 15 bildenden Zellrahmenaussparungen aufbringen. Auf der Zellrahmenrückseite korrespondieren mit den Dichtnoppen 18 die Einkerbungen 19.

Der Zellrahmen 42, 43 kann eine Dicke von zum Beispiel ca. 10mm haben, und die Weite der Schlitzaufnahme 44, die sich mittig in der Materialdicke des Zellrahmens 42, 43 befindet, beträgt zum Beispiel 1% bis 5% der Zellrahmendicke. Jeder Dichtungswulst 8 auf der Zellrahmenvorderseite ist vorzugsweise halbrund gewölbt ausgebildet und hat eine Maximalhöhe von 50% der Zellrahmendicke. Die korrespondierenden Einkerbungen 11 auf der Zellrahmenrückseite sind zum Beispiel dreieckig mit einem Kerbwinkel von 90° und einem abgerundeten Kerbgrund ausgebildet, wobei die Kerbgrundtiefe zum Beispiel circa 15% der Zellrahmendicke beträgt. Die Sitzfläche 10 des Zellrahmen 42, 43 kann zum Beispiel eine Höhe von 20% der Zellrahmendicke haben, so dass die Dichtungswülste 8 um maximal 15% der Zellrahmendicke abgeplattet werden. Durch das Einpressen des jeweiligen halbrunden Dichtungswulsts 8 in seine zugehörige Dichtungskerbe 11 mit geraden Kanten entstehen zwei Dichtflächen an den beiden Kerbrändern. Alternativ kann bei entsprechend genau reproduzierbarer Zellrahmenfertigung eine Abplattung von ca. 5% bis 10% genügen, so dass sich dann die Dichtungswulsthöhe auf ca. 40% bis 45% der Zellrahmendicke reduzieren lässt.

Der umlaufende Formring 10 des Zellrahmens 42, 43 hat typischerweise eine Dicke von ca. 40% bis 50% der Zellrahmendicke, wobei sein äußerer Durchmesser gleich dem äußeren Zellrahmendurchmesser ist. Die radiale Breite des Formrings 10 kann beispielsweise etwa 250% der Zellrahmendicke betragen.

Jeder Zellrahmen 42, 43 weist eine in den Figuren 2 und 3 oben liegende Stellungsmarkierung 14 auf, die seine Winkelausrichtung anzeigt und sich etwa mittig oberhalb der mittleren der drei oberen Durchgangsöffnungen 13b befindet. Auf der Zellrahmenvorderseite befinden sich zwischen erstem und zweitem umlaufendem Dichtungswulst 8 konzentrisch im Winkelabstand von 120° zueinander drei erhabene Führungsnoppen 12, mit denen auf der Zellrahmenrückseite zwei Paare von jeweils drei ebenfalls konzentrisch im Winkelabstand von 120° zueinander angeordnete Führungsnoppenaufnahmen 17 korrespondieren. Dabei sind die beiden Paare von je drei Führungsnoppen 17 um den Durchgangsöffnungs-Winkelabstand α im Uhrzeigersinn gegeneinander versetzt angeordnet.

Zum Aufbau des Elektrolyseblockstapels werden abwechselnd je eine Membranbaugruppe 40 und eine Elektrodenbaugruppe 41 aneinander geschichtet, wie in der Explosionsansicht von Fig. 4 gezeigt, wobei die Zellrahmen der einen Baugruppe jeweils um den Durchgangsöffnungs-Winkelversatz α gegeneinander verdreht positioniert werden. Dies bedeutet, dass die Stellungsmarkierungen 14 aller Zellrahmen mit ungerader Position im Stapel, d.h. des ersten, dritten, fünften Zellrahmens usw., ebenso miteinander fluchten wie die Stellungsmarkierungen 14 aller Zellrahmen mit geradzahliger Stapelposition, das heißt des zweiten, vierten, sechsten Zellrahmens usw., wobei die Stellungsmarkierungen 14 der Zellrahmen mit ungerader Position gegenüber den Stellungsmarkierungen 14 der Zellrahmen mit geradzahliger Position um den Winkelabstand α gegeneinander versetzt sind. Mit anderen Worten sind alle Membranbaugruppen 40 mit identisch orientierten Zellrahmen und alle Elektrodenbaugruppen 41 mit identisch orientierten, aber zu den Zellrahmen der Membranbaugruppen um den Winkel α in Umfangsrichtung versetzt positionierten Zellrahmen angeordnet.

Auf diese Weise bilden sich im oberen und im unteren Zellrahmenbereich durchgängig durch die ganze Zellrahmenschichtung des Elektrolyseblockstapels je zwei Durchgangskanäle, die durch wechselseitige Überlappung von jeweils zwei der drei Durchgangsöffnungen 13a, 13b gebildet sind. Dadurch kann zum einen Elektrolyt der Anoden- und der Kathodenseite aus verschiedenen Kanälen auf der Vorder- beziehungsweise Rückseite jedes Bipolarblechs zugeführt werden, und zum anderen können die Produktgase Wasserstoff von der Kathodenseite und Sauerstoff von der Anodenseite verwechslungssicher in getrennten Kanälen abgeführt werden. Durch die entsprechende Strukturierung der baugleichen Zellrahmen 42, 43 ist die jeweils nicht genutzte, dritte Durchgangsöffnung gegenüber der anderen Bipolarblechseite und den anderen Durchgangsöffnungen dicht verschlossen. Auf jeder Seite der Bipolarplatte 3 sind Elektrolytzufuhr und Gasabfuhr in Kreuzstrom geführt.

Somit bilden je eine Membranbaugruppe aus Zellrahmen und Membran sowie eine Elektrodenbaugruppe aus identischem Zellrahmen und Elektroden-Package eine vollständige Elektrolysezelle des Blockstapels, ohne dass weitere Bauteile erforderlich sind. Beim Zusammenbau eines Blockstapels aus einer Vielzahl von Membran- und Elektrodenbaugruppen ist lediglich auf den Wechsel der Stellungsmarkierungen 14 der Zellrahmen 42, 43 und darauf zu achten, dass die Stellungsmarkierungen 14 der Zellrahmen mit ungerader Position sowie die Stellungsmarkierungen der Zellrahmen mit geradzahliger Position im Blockstapel jeweils untereinander fluchten. Bei solchermaßen richtiger, alternierender Aneinanderschichtung dieser beiden Baugruppen ergibt sich automatisch die gewünschte Kanalstruktur für die Zufuhr von Elektrolyt aus einem entsprechenden internen Sammelkanal und die Abfuhr der beiden Produktgase in gastechnisch getrennten, zellrahmeninternen Sammelkanälen nach außen.

Die Fig. 5 und 6 veranschaulichen stirnendseitige Abschlüsse auf der Kathodenseite beziehungsweise der Anodenseite eines Elektrolyseblockstapels, der dazwischen aus einer Mehrzahl von Elektrolysezellen besteht, die durch die Aneinanderreihung eine ansprechende Anzahl von Membranbaugruppen 40 und Elektrodenbaugruppen 41 gemäß Fig. 4 gebildet sind. Die jeweils letzte Blockzelle auf der Kathodenseite beziehungsweise der Anodenseite hat einen gegenüber den inneren Zellen modifizierten Aufbau, damit deren Elektroden, d.h., die erste Kathoden-Elektrode und die letzte Anoden-Elektrode, direkt mit geeigneten Polblechen verbunden werden können, an die nach außen zugehörige elektrische Gleichstrom-Versorgungsleitungen direkt angeschlossen werden können. Dabei sind die beiden endseitigen Blockzellen im Wesentlichen gegengleich aufgebaut, wie sich aus den Fig. 5 und 6 ergibt. Speziell beinhaltet der kathodenseitige Endaufbau gemäß Fig. 5 eine letzte Membranbaugruppe 40 aus Membran-Zellrahmen 42 und Membran 6, an die nach außen das Kathoden-Polblech 21 anschließt. Das Kathoden-Polblech 21 ist in einem Mittenbereich mit einer daran fixierten Kathoden-Stromübertragerstruktur 20 versehen, auf deren gegenüberliegender Seite eine Kathoden-Vorelektrode 1 fixiert ist, die dementsprechend die erste Kathode-Vorelektrode im Stapel bildet. Die Stromübertragerstruktur 20 entspricht der für die inneren Zellen verwendeten Kathoden-Stromübertragerstruktur 2, wobei für eine optimierte Stromdichteverteilung über die gesamte Elektrodenoberfläche hinweg die Fixierung der genannten Komponenten 1, 20, 21 aneinander vorzugsweise an deutlich mehr Verbindungsstellen hergestellt wird als für die inneren Zellen.

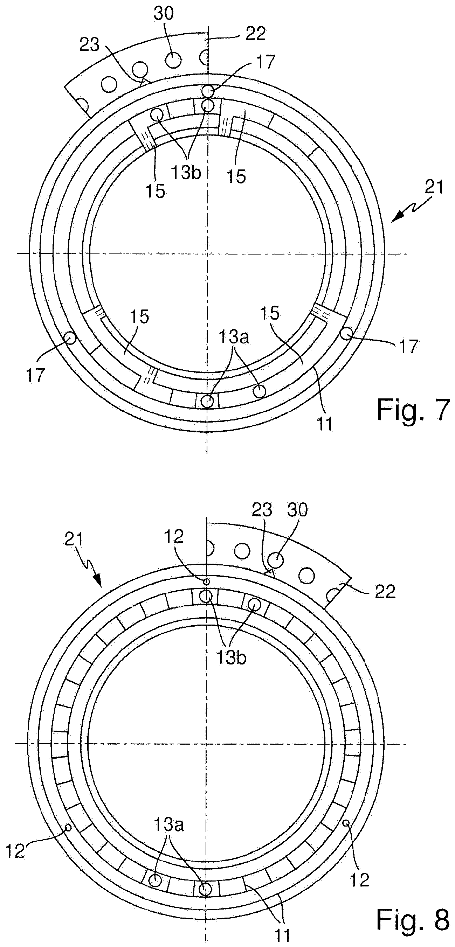

Die Fig. 7 und 8 zeigen die Rückseite beziehungsweise die Vorderseite des Kathoden-Polblechs 21. Wie aus Fig. 7 ersichtlich, besitzt die Rückseite des Kathoden-Polblechs 21 eine Struktur der Dichtungseinkerbungen 11, die mit der Dichtungswulststruktur 8 der zugewandten Zellrahmen-Vorderseite entsprechend Fig. 3 korrespondiert. Zellrahmen 42 und Kathoden-Polblech 21 werden so aneinander gesetzt, dass deren Dichtungsstrukturen und Führungsnoppenstrukturen aufeinander passen. Am Außenrand weist das Kathoden-Polblech 21 eine Minuspol-Anschlussfahne 22 mit einer zugehörigen Aussparung 23 und Bolzendurchführungsbohrungen 30 auf.

Wie aus den Fig. 7 und 8 deutlich wird, ist das Kathoden-Polblech 21 nur noch mit jeweils zwei der drei unteren beziehungsweise oberen Durchgangsöffnungen 13a, 13b für die Elektrolytmedien versehen. Gemäß Fig. 8 weist die Dichtungsstruktur an der Vorderseite des Kathoden-Polblechs 21 fünf konzentrisch umlaufende Abdichtungseinkerbungen mit Querrippen in einem Winkelabstand von 10° umlaufend auf, die unter anderem die Durchgangsöffnungen 13a, 13b allseitig umschließen. Das metallische Kathoden-Polblech 21 ist das einzige Bauteil, das beidseitig eine Einkerbungs-Abdichtungsstruktur aufweist.

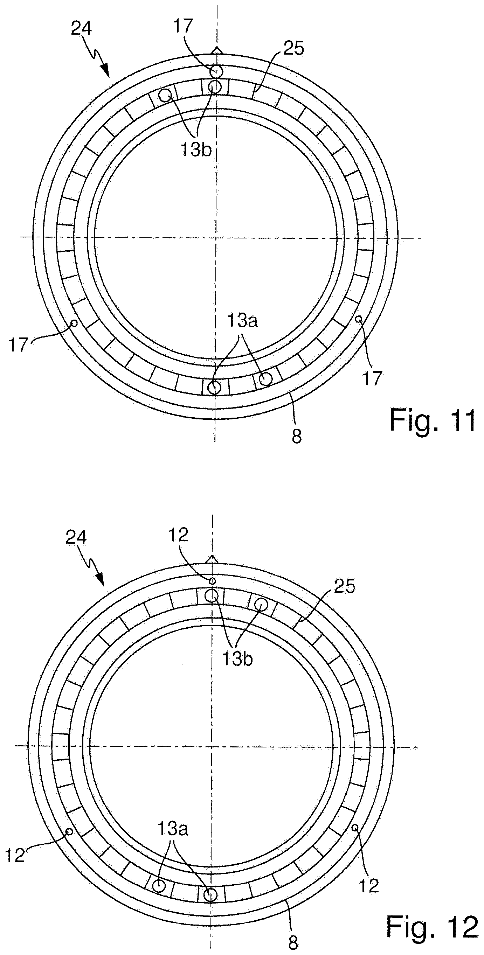

An das Kathoden-Polblech 21 schließt gemäß Fig. 5 eine Isolator-Druckplatte 24 an, die vorzugsweise aus dem gleichen, elektrisch isolierendem Kautschukmaterial besteht wie die Zellrahmen 42, 43. Es kann als Vollmaterialplatte ohne innere Einbauten produziert und dauerelastisch vulkanisiert werden. Die Fig. 11 und 12 zeigen in Draufsicht die im Stapel nach innen gewandte Rückseite beziehungsweise die nach außen gewandte Vorderseite der Isolator-Druckplatte 24. Wie daraus ersichtlich, weist sie die jeweiligen beiden Durchgangsöffnungen 13a, 13b entsprechend denjenigen des Kathoden-Polblechs 21 auf. Wie aus den Fig. 11 und 12 weiter ersichtlich, weist die Isolator-Druckplatte 24 identisch spiegelverkehrte Dichtungswulststrukturen an der Rückseite beziehungsweise der Vorderseite auf. Weiter ist an der Vorderseite gemäß Fig. 12 eine Führungsnoppenstruktur 12 vorgesehen, während an der Rückseite gemäß Fig. 11 eine Führungsnoppenaufnahmestruktur 17 ausgebildet ist.

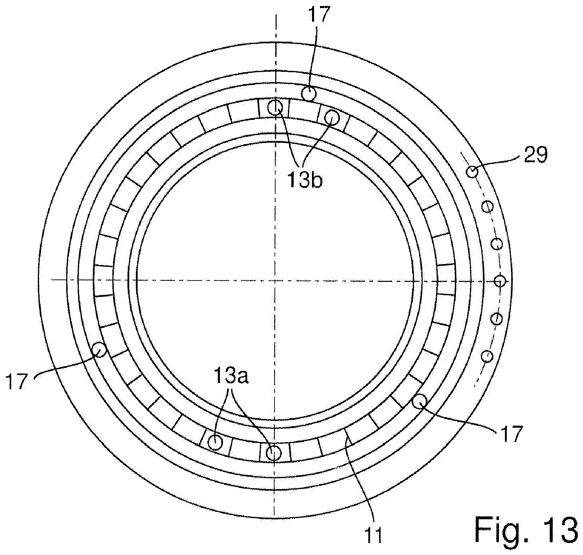

An die Isolator-Druckplatte 24 schließt als stirnseitig letzte Platte des Elektrolyseblockstapels auf der Kathodenseite die Blockendplatte 28 an. Fig. 13 zeigt die der Isolator-Druckplatte 24 zugewandte Rückseite der Blockendplatte 28. Wie daraus ersichtlich, ist die Rückseite der Blockendplatte 28 mit einer Struktur von Dichtungseinkerbungen 11 versehen, die mit der Dichtungswulststruktur 8 auf der Vorderseite der Isolator-Druckplatte 24 korrespondiert. Weiter ist sie mit einer Führungsnoppenaufnahmestruktur 17 versehen, die mit der Führungsnoppenstruktur 12 an der Vorderseite der Isolator-Druckplatte 24 korrespondiert.

Der anodenseitige Endaufbau gemäß Fig. 6 beinhaltet für die erste anodenseitige Elektrolysezelle wiederum eine Membranbaugruppe 40 mit Zellrahmen 42 und Membran 6, an die nach außen ein Anoden-Polblech 26 anschließt. Dieses ist in einem Mittenbereich wiederum mit einer Stromübertragerstruktur 20 und einer für den Stapel ersten Anoden-Vorelektrode 5 versehen. Hinsichtlich den Materialien und der Verbindung dieser Anoden-Polblechkomponenten 26, 20, 5 gilt das oben zur Kathoden-Polblechbaugruppe 21, 20, 1 Gesagte in gleicher Weise. So ist die Stromübertragerstruktur 20 vorzugsweise als Metallgestrick oder vorgeformtes Streckmetall ausgebildet, um den Verbund von Polblech 26, Stromübertragerstruktur 20 und Vorelektrode 5 elastisch rückfedernd an die anodenseitig erste Membran 6 anzudrücken.

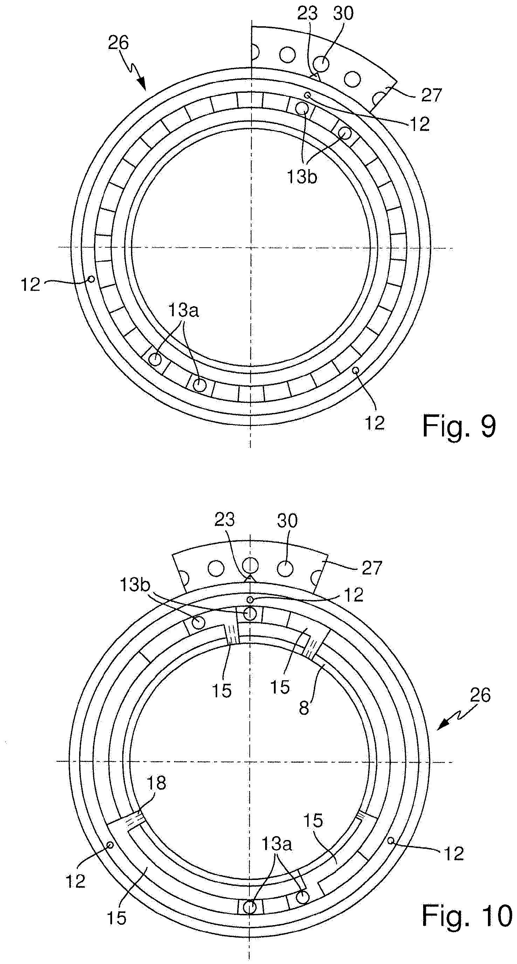

Die Fig. 9 und 10 zeigen das Anoden-Polblech 26 mit seiner Rückseite beziehungsweise seiner der Membranbaugruppe 6, 42 zugewanden Vorderseite. Wie daraus ersichtlich, weist das Anoden-Polblech 26 an seiner Vorderseite eine Dichtungswulststruktur 8 auf, die der Dichtungseinkerbstruktur 11 der Zellrahmenrückseite entspricht. Außerdem weist es auf beiden Seiten die Führungsnoppenstruktur 12 auf. Am Außenrand ragt eine Pluspol-Anschlussfahne 27 mit zugehöriger Aussparung 23 und Bolzendurchführungsbohrungen 30 ab.

Weiter weist das Anoden-Polblech 26 wie das Kathoden-Polblech 21 je zwei untere und obere Durchgangsöffnungen 13a, 13b auf. Auf seiner Rückseite ist das Anoden-Polblech 26 mit einer Dichtungseinkerbungsstruktur 11 versehen, die ähnlich wie die Vorderseite des Kathoden-Polblechs 21 fünf konzentrisch umlaufende Abdichtungsringkerben mit Querrippen umlaufend im Winkelabstand von 10° umfasst, welche alle Durchgangsöffnungen 13a, 13b allseitig umschließen. Demgemäß besitzt das metallische Anoden-Polblech 26 vorderseitig eine Dichtungswulststruktur und rückseitig eine Dichtungseinkerbungsstruktur und bildet so ein unverwechselbares, eigenes Bauteil.

An das Anoden-Polblech 26 schließt sich nach außen die Isolator-Druckplatte 24 an, die baugleich mit derjenigen des kathodenseitigen Stapelabschlusses gemäß Fig. 5 ist, mit der Ausnahme, dass sie nicht die Durchgangsöffnungen 13a, 13b aufweisen braucht. Alternativ kann sie identisch wie die kathodenseitige Isolator-Druckplatte mit den Durchgangsöffnungen 13a, 13b ausgeführt und durch eine diese Öffnungen absperrende, aufgelegte, dünne vollflächige Isolator-Dichtung ergänzt sein.

Als Endabschluss schließt dann an die anodenseitige Isolator-Druckplatte 24 die Blockendplatte 28 entsprechend derjenigen des kathodenseitigen Endabschlusses an. Dabei hat in einer Normalkonfiguration die Anoden-Endplatte im Gegensatz zur Kathoden-Endplatte keine Durchgangsöffnungen. In alternativen Konfigurationen, die sich mit den selben inneren Blockbauteilen realisieren lassen, weist die Anoden-Endplatte alle Durchgangsöffnungen für die Elektrolysemedien auf, während die Kathoden-Endplatte keine Durchgangsöffnungen hat, oder von den beiden Endplatten weist eine die Durchgangsöffnungen 13a für den Elektrolyten und die andere die Durchgangsöffnungen 13b für die Produktgase auf. In einer weiteren alternativen Konfiguration sind mittels einer stapelmittigen Verteilerplatte für die Elektrolytflüssigkeit zwei Teilblöcke gebildet, bei denen jede Endplatte jeweils die Durchgangsöffnungen für den Elektrolyten beziehungsweise die Produktgase aufweist. In dieser Ausführungsvariante werden die inneren Polbleche elektrisch kurzgeschlossen. Eine äußeres Polblech wird jeweils als Minuspol angeschlossen. Die Fluidzufuhr in der Doppelblockmitte erfolgt über elektrisch isolierte Zufuhrrohre.

Bei der Endfertigung des Elektrolyseblockstapels werden die Vorderseiten der Isolator-Druckplatten 24 mit ihrer Dichtungswulststruktur gas- und flüssigkeitsdicht in die entsprechende Dichtungseinkerbungsstruktur der anliegenden Endplatte 28 eingedrückt. Die beiden Isolator-Druckplatten 24 haben beidseitig jeweils einen Sitzring zwischen dem ersten und dem zweiten inneren Dichtungswulst und außerhalb des äußeren, fünften Dichtungswulsttest.

Die metallischen Endplatten 28 sind im Durchmesser größer als die Zellrahmen 42, 43 und weisen ein umlaufend gleichmäßiges Lochbild 29 auf. Nach Stapeln eines Blocks und Auflegen der Endplatten 28 werden beide Endplatten 28 umlaufend mindestens mit Gewindebolzen, beidseitigen Muttern und Kontermuttern sowie mindestens einseitig mit Tellerfederpaketen gas- und flüssigkeitsdicht verspannt. Der Elektrolyseblockstapel muss nur so weit verspannt werden, bis alle äußeren sichtbaren Sitzringe auf den Zellrahmen 42, 43 aufliegen und keine Spalte mehr zwischen den Zellrahmen 42, 43 vorhanden sind. Die je nach Konfiguration an beiden oder nur an einer Endplatte 28 austretenden Durchgangsöffnungen 13a, 13b für Elektrolyt und Produktgase werden auf der Außenseite der betreffenden Endplatte 28 mit geeigneten Anschlussteilen für eine externe Rohranbindung versehen. Die Einkerbungs-/Abdichtungsstrukturen, die Lage der Durchgangsöffnungen und die Lage der Führungsnoppen und Führungsnoppenaufnahmen sind für die Endplatten 28 und die Isolator-Druckplatten 24 identisch, so dass es bei der Stapelschichtung auch ohne äußere Stellungsmarkierung dieser Bauteile keine Positionierungsprobleme gibt, da diese Bauteile nur in einer Orientierung identisch aufeinander gesetzt werden können und auf Anoden- und Kathodenseite identisch sind.

Wie die obige Beschreibung vorteilhafter Ausführungsformen deutlich macht, stellt die Erfindung in sehr vorteilhafter Weise einen zum Beispiel zur alkalischen Wasserelektrolyse geeigneten Elektrolyseblock im Stapeldesign und dafür benötige Komponenten zur Verfügung, die eine wirtschaftliche Großserienherstellung aus wenigen unterschiedlichen Bauteilen ermöglichen. Es versteht sich, dass die Erfindung außer den gezeigten und oben beschriebenen Ausführungsbeispielen weitere Realisierungen umfasst. So können beispielsweise statt der gezeigten drei Produktgas-Durchführungsöffnungen 13b auch eine größere Anzahl solcher Durchführungsöffnungen 13b zur Bereitstellung von mehr als zwei getrennten Produktgaskanälen vorgesehen sein. Analog können statt der gezeigten drei Elektrolyt-Durchgangsöffnungen 13a in alternativen Ausführungen mehr oder weniger derartige Durchgangsöffnungen 13a vorgesehen sein.

## Patentansprüche

1. Zellrahmen für einen Elektrolyseblock, insbesondere zur alkalischen Wasserelektrolyse, mit
- wenigstens drei in Umfangsrichtung versetzt angeordneten Produktgasabfuhr-Durchgangsöffnungen (13b) mit zugeordneten Abfuhrkanälen (15), von denen ein Teil durch eine vorderseitige Abfuhrkanalstruktur und ein restlicher Teil durch eine rückseitige Abfuhrkanalstruktur des Zellrahmens gebildet sind, und
- wenigstens einer Elektrolytversorgungs-Durchgangsöffnung (13a), insbesondere wenigstens drei Elektrolytversorgungs-Durchgangsöffnungen, mit jeweils zugeordnetem Versorgungskanal (15), der durch eine vorder- und/oder rückseitige Versorgungskanalstruktur des Zellrahmens gebildet ist,
- wobei der Zellrahmen aus einem Material mit Dichtungseigenschaft gebildet und an einer Seite mit Dichtungswülsten (8) sowie an einer gegenüberliegenden Seite mit korrespondierenden Dichtungseinkerbungen (11) versehen ist.

2. Zellrahmen nach Anspruch 1, weiter **dadurch gekennzeichnet, dass** er eine umlaufende Innenrand-Schlitzaufnahme (44) zum Aufnehmen einer Bipolarplatte oder einer Membran aufweist.

3. Zellrahmen nach Anspruch 1 oder 2, weiter **dadurch gekennzeichnet, dass** zwei Gruppen fluidgetrennter Produktgasabfuhrstrukturen zum getrennten Abführen zweier Produktgase durch die Produktgasabfuhr-Durchgangsöffnungen und die Abfuhrkanäle gebildet sind, wobei die zu den beiden Gruppen gehörigen Produktgasabfuhr-Durchgangsöffnungen gegeneinander um einen vorgegebenen Winkel (α) in Umfangsrichtung versetzt am Zellrahmen ausgebildet sind, insbesondere um einen Winkel zwischen 5° und 60°.

4. Zellrahmen nach einem der Ansprüche 1 bis 3, weiter **gekennzeichnet durch** einen in einen radial äußeren Bereich des Zellrahmens integrierten Druckring (7).

5. Zellrahmen nach einem der Ansprüche 1 bis 4, weiter **gekennzeichnet durch** einen oder mehrere integrierte Spannseilringe (9) und/oder eine oder mehrere integrierte Cordlagen (9a) und/oder einen oder mehrere Metallringe mit unterschiedlichen Radien.

6. Elektrodenbaugruppe für einen Elektrolyseblock, insbesondere zur alkalischen Wasserelektrolyse, mit
- einem Elektroden-Zellrahmen (43) nach einem der Ansprüche 2 bis 5 und
- einem einteilig vorgefertigten Elektroden-Package mit einer Bipolarplatte (3), einer Kathoden-Stromübertragerstruktur (2) und einer Anoden-Stromübertragerstruktur (4), die auf je einer Seite der Bipolarplatte angeordnet und an dieser fixiert sind, einer Kathoden-Vorelektrode (1), die auf der der Bipolarplatte abgewandten Seite der Kathoden-Stromübertragerstruktur angeordnet und an dieser fixiert ist, und einer Anoden-Vorelektrode (5), die auf der der Bipolarplatte abgewandten Seite der Anoden-Stromübertragerstruktur angeordnet und an dieser fixiert ist,
- wobei das Elektroden-Package mit seiner Bipolarplatte in der umlaufenden Innenrand-Schlitzaufnahme (44) des Elektroden-Zellrahmens gehalten ist.

7. Bausatz für einen Elektrolyseblock, insbesondere zur alkalischen Wasserelektrolyse, mit
- einer vorgebbaren Anzahl von Elektrodenbaugruppen (41) nach Anspruch 6 und
- einer vorgebbaren Anzahl von Membranbaugruppen (40), die jeweils einen Membran-Zellrahmen (42) und eine Membran (6) beinhalten, die in einer umlaufenden Innenrand-Schlitzaufnahme (44) des Membran-Zellrahmens gehalten ist,
- wobei der Membran-Zellrahmen baugleich mit dem Elektroden-Zellrahmen ist und
- wobei die Elektrodenbaugruppe und die Membrangruppe dafür ausgelegt sind, den Elektrolyseblock durch alternierendes und um einen vorgegebenen Winkel verdrehtes Aneinanderlegen je einer Elektrodenbaugruppe und einer Membranbaugruppe aufzubauen.

8. Elektrolyseblock, insbesondere zur alkalischen Wasserelektrolyse, mit einem Stapelaufbau aus aneinanderliegenden Zellrahmen (42, 43), an denen Zellmembranen (6), Bipolarplatten (3) sowie Anoden- und Kathoden-Elektrodenstrukturen (1, 2, 4, 5) gehalten sind,
**dadurch gekennzeichnet, dass**
die Zellrahmen baugleich und solche nach einem der Ansprüche 1 bis 5 sind und benachbarte Zellrahmen alternierend in einem vorgegebenen Winkel (α) in Umfangsrichtung versetzt angeordnet sind.

9. Elektrolyseblock nach Anspruch 8, weiter **dadurch gekennzeichnet, dass** er mindestens eine Elektrodenbaugruppe nach Anspruch 6 aufweist oder durch den Bausatz nach Anspruch 7 gebildet ist.

10. Elektrolyseblock nach Anspruch 8 oder 9, weiter **gekennzeichnet durch** blockendseitige Abschlusseinheiten, die auf der einen Blockendseite ein Kathoden-Polblech (21) mit Endplatte (28) und auf der anderen Blockendseite ein Anoden-Polblech (26) mit Endplatte (28) beinhalten.

## Claims

1. Cell frame for an electrolysis block, preferably for alkaline water electrolysis, comprising
- at least three product gas discharge passage openings (13b), arranged offset in the circumferential direction, having associated discharge ducts (15), with part thereof formed by a front-sided discharge duct structure and a remaining part by a rear-sided discharge duct structure of the cell frame, and
- at least one electrolyte supply passage opening (13a), preferably at least three electrolyte supply passage openings, each with associated supply duct (15) which is formed by a front- and/or rear-sided supply duct structure of the cell frame,
- wherein the cell frame is made of a material presenting sealing properties and is provided on one side with sealing beads (8) and on an opposite side with corresponding sealing notches (11).

2. Cell frame according to claim 1, further **characterized in that** it has a peripheral inner rim slotted accommodation (44) for accommodating a bipolar plate or a membrane.

3. Cell frame according to claim 1 or 2, further **characterized in that** two groups of fluid-separated product gas discharge structures are provided for separately discharging two product gases through the product gas discharge passage openings and the discharge ducts, wherein the product gas discharge passage openings belonging to the two groups are disposed on the cell frame offset in relation to each other in the circumferential direction by a predetermined angle (α), preferably by an angle between 5° and 60°.

4. Cell frame according to any one of claims 1 to 3, further **characterized by** a pressure ring (7) integrated in a radial outer region of the cell frame.

5. Cell frame according to any one of claims 1 to 4, further **characterized by** one or more integrated tension cable rings (9) and/or one or more integrated cord layers (9a) and/or one or more metal rings having different radii.

6. Electrode assembly for an electrolysis block, preferably for alkaline water electrolysis, comprising
- an electrode cell frame (43) according to any one of claims 2 to 5, and
- a one-piece prefabricated electrode package including a bipolar plate (3), a cathode power transmission structure (2) and an anode power transmission structure (4), each arranged on a respective side of the bipolar plate and fixed thereto, a cathode pre-electrode (1), arranged on the side of the cathode power transmission structure facing away from the bipolar plate and fixed thereto, and an anode pre-electrode (5), arranged on the side of the anode power transmission structure facing away from the bipolar plate and fixed thereto,
- wherein the electrode package with its bipolar plate is held in the peripheral inner rim slotted accommodation (44) of the electrode cell frame.

7. Construction kit for an electrolysis block, preferably for alkaline water electrolysis, comprising
- a pre-definable number of electrode assemblies (41) according to claim 6, and
- a pre-definable number of membrane assemblies (40), each including a membrane cell frame (42) and a membrane (6), which is held in a peripheral inner rim slotted accommodation (44) of the membrane cell frame,
- wherein the membrane cell frame is structurally identical to the electrode cell frame, and
- wherein the electrode assembly and the membrane group are configured for building the electrolysis block by adjoining respectively one electrode assembly and one membrane assembly in an alternating pattern and turned by a predetermined angle.

8. Electrolysis block, preferably for alkaline water electrolysis, having a stack formation composed of adjoining cell frames (42, 43) on which cell membranes (6), bipolar plates (3) together with anode and cathode electrode structures (1, 2, 4, 5) are held,
**characterized in that**
the cell frames are structurally identical and are cell frames according to any one of claims 1 to 5 and adjacent cell frames are arranged offset in the circumferential direction by a predetermined angle (α) in an alternating pattern.

9. Electrolysis block according to claim 8, further **characterized in that** it includes at least one electrode assembly according to claim 6, or is composed of the construction kit according to claim 7.

10. Electrolysis block according to claim 8 or 9, further **characterized by** termination units on the block end side, which units include on the one block end side a cathode pole sheet (21) with an end plate (28) and on the other block end side an anode pole sheet (26) with an end plate (28).

## Revendications

1. Cadre de cellule pour un bloc d'électrolyse, en particulier pour l'électrolyse aqueuse alcaline, avec
- au moins trois ouvertures de passage (13b) pour l'évacuation de gaz de produit disposées en décalage en direction périphérique avec des canaux d'évacuation associés (15), dont une partie sont formés par une structure de canaux d'évacuation à l'avant et une partie restante sont formés par une structure de canaux d'évacuation à l'arrière du cadre de cellule, et
- au moins une ouverture de passage (13a) pour l'alimentation en électrolyte, en particulier au moins trois ouvertures de passage pour l'alimentation en électrolyte, avec un canal d'alimentation respectivement associé (15), qui est formé par une structure de canaux d'alimentation avant et/ou arrière du cadre de cellule,
- dans lequel le cadre de cellule est formé en un matériau ayant des propriétés d'étanchéité et est muni sur un côté de bourrelets d'étanchéité (8) ainsi que sur un côté opposé d'encoches d'étanchéité correspondantes (11).

2. Cadre de cellule selon la revendication 1, en outre **caractérisé en ce qu'**il présente un logement périphérique (44) en forme de fente du bord intérieur destiné à contenir une plaque bipolaire ou une membrane.

3. Cadre de cellule selon la revendication 1 ou 2, en outre **caractérisé en ce que** deux groupes de structures d'évacuation de gaz de produit fluidiquement séparées pour l'évacuation séparée de deux gaz de produit sont formés par les ouvertures de passage pour l'évacuation de gaz de produit et les canaux d'évacuation, dans lequel les ouvertures de passage pour l'évacuation de gaz de produit appartenant aux deux groupes sont formées sur le cadre de cellule avec un décalage d'un angle prédéterminé (α) en direction périphérique, en particulier d'un angle compris entre 5° et 60°.

4. Cadre de cellule selon l'une quelconque des revendications 1 à 3, en outre **caractérisé par** un anneau de pression (7) intégré dans une région radialement extérieure du cadre de cellule.

5. Cadre de cellule selon l'une quelconque des revendications 1 à 4, en outre **caractérisé par** un ou plusieurs anneau(x) de câble de tension intégré(s) (9) et/ou une ou plusieurs couche(s) de corde intégrée(s) (9a) et/ou un ou plusieurs anneau(x) métallique(s) avec des rayons différents.

6. Module d'électrodes pour un bloc d'électrolyse, en particulier pour l'électrolyse aqueuse alcaline, avec
- un cadre de cellule d'électrode (43) selon l'une quelconque des revendications 2 à 5, et
- un paquet d'électrodes préfabriqué en une seule pièce avec une plaque bipolaire (3), une structure de transfert de courant de cathode (2) et une structure de transfert de courant d'anode (4), qui sont disposées respectivement sur un côté de la plaque bipolaire et fixées à celui-ci, une pré-électrode cathodique (1), qui est disposée sur le côté de la structure de transfert de courant de cathode détourné de la plaque bipolaire et est fixée à celui-ci, et une pré-électrode anodique (5), qui est disposée sur le côté de la structure de transfert de courant d'anode détourné de la plaque bipolaire et est fixée à celui-ci,
- dans lequel le paquet d'électrodes avec sa plaque bipolaire est maintenu dans le logement périphérique (44) en forme de fente du bord intérieur du cadre de cellule d'électrode.

7. Kit de construction pour un bloc d'électrolyse, en particulier pour l'électrolyse aqueuse alcaline, avec
- un nombre prévisible de modules d'électrodes (41) selon la revendication 6, et
- un nombre prévisible de modules de membranes (40), qui contiennent respectivement un cadre de cellule de membrane (42) et une membrane (6), qui est maintenue dans un logement périphérique (44) en forme de fente du bord intérieur du cadre de cellule de membrane,
- dans lequel le cadre de cellule de membrane est de même construction que le cadre de cellule d'électrode, et
- dans lequel le module d'électrodes et le module de membranes sont conçus pour construire le bloc d'électrolyse par juxtaposition alternée et tournée d'un angle prédéterminé chaque fois d'un module d'électrodes et d'un module de membranes.

8. Bloc d'électrolyse, en particulier pour l'électrolyse aqueuse alcaline, avec une structure d'empilement composée de cadres de cellule juxtaposés (42, 43), sur lesquels des membranes de cellule (6), des plaques bipolaires (3) ainsi que des structures d'électrodes d'anode et de cathode (1, 2, 4, 5) sont maintenues,
**caractérisé en ce que** les cadres de cellule sont de même construction et sont réalisés selon l'une quelconque des revendications 1 à 5 et des cadres de cellule voisins sont disposés en alternance avec un décalage d'un angle prédéterminé (α) en direction périphérique.

9. Bloc d'électrolyse selon la revendication 8, en outre **caractérisé en ce qu'**il présente au moins un module d'électrodes selon la revendication 6 ou est formé par le kit de construction selon la revendication 7.

10. Bloc d'électrolyse selon la revendication 8 ou 9, en outre **caractérisé par** des unités terminales de fin de bloc, qui contiennent sur un premier côté de fin de bloc une tôle polaire cathodique (21) avec une plaque terminale (28) et sur l'autre côté de fin de bloc une tôle polaire anodique (26) avec une plaque terminale (28).
